# EUROPEAN PATENT APPLICATION

(11) **EP 2 990 985 A1**
(43) Date of publication of application: **02.03.2016**
(21) Application number: 14182116.5
(22) Date of filing: 25.08.2014
(51) Int. Cl.: G06F 21/60, H04L 29/06

(54) **Method and system for trust level based data storage in a distributed storage environment and trust level based access to the storage environment**

(71) Applicant: Deutsche Telekom AG, 53113 Bonn (DE)
(72) Inventor: Roos, Andreas, 64354 Reinheim (DE); Drüsedow, Steffen, 16727 Oberkrämer (DE); Ilaghi, Mahya, 10963 Berlin (DE)
(74) Representative: Vossius & Partner Patentanwälte Rechtsanwälte mbB

(57) **Abstract**

The invention relates to a method and system for trust level-based data storage in a distributed storage environment and trust level based access to the storage environment. The method and system automatically performs data storage based on assigned trust levels of storage solutions and/or locations and a classified or required trust level of the data to be stored. The method and system automatically performs trust level based access control that allows access to the data in the storage environment only for applications and/or services which fulfil the assigned or required trust level of stored data.

## Description

### Field of the invention

The invention relates to a method and system for trust level-based data storage in a distributed storage environment and trust level based access to the storage environment.

### Background of the invention

The amount of data in the digital universe will still increase in the next years [1]. A lots of these data needs to be stored. Different solutions of data storage exist in the market. For instance, there are a lot of public storage services, e.g. Google Drive [2], Apple iCloud [3], Dropbox [4] available in the Internet. Moreover, there are network attached storage (NAS) hardware solutions available, such as QNAP [5] and Synology [6]. Furthermore, open source solutions, such as ownCloud [7] exists which are able to turn a PC or server into a storage and/or cloud environment, e.g. in the home network.

Each of the above mentioned solutions, such as Google Drive [2], Apple iCloud [3], Dropbox [4], QNAP [5], Synology [6] and ownCloud [7] have browser-based Interfaces or Apps for configuration and interaction purposes. The user is able to use each of these solutions to store its data. However, the user has to decide for each data storage process which solution to use. In other words the user has to decide which solution is the most suitable one for storing the data. In this context the term suitable can be discussed and interpreted in different way. First, suitable can be in relation to the capacity of the storage solution. Second, suitable can be in relation to the upload time and download time to and from the storage solution. And third, suitable can be in relation to how trustworthy is the storage solution and location.

Beside pure data storage process itself, privacy aware data handling will become important in the future which enables access control to the data in order to avoid malicious access from other users and applications and/or services to the stored data. Basically, data access control is performed by solutions mentioned above, such as Google Drive [2], Apple iCloud [3], Dropbox [4], QNAP [5], Synology [6] and ownCloud [7]. However, such kind of access control does not perform privacy aware data access control to e.g. 3rd party applications and/or services which get access to the stored data. There is no ability to differentiate the access to the data according to a defined privacy level which is managed by the user.

Accordingly, there is a need to overcome the above mentioned drawback of the art. In particular, it is an objective of this invention to provide a new method and system which enables data storage based on assigned trust levels of storage solutions and/or locations and the classified (required) trust level of the data to be stored. Moreover, the method and systems provides trust level based access control to the storage environment that allows access to the data only for applications and/or services which fulfil the assigned (required) trust level.

### Summary of the Invention

The object of the invention is achieved by the features of the independent claims. The dependent claims refer to further preferred aspects of the invention.

According to an aspect of the present invention a new method and system performs data storage based on assigned trust levels of storage solutions and/or storage locations and a classified or required trust level of the data to be stored.

According to a further aspect of the present invention the trust level of a storage solution and/or storage location is assigned by the user. In a data storage process the user classifies the data to be stored with a certain trust level which is required.

Based on this defined trust level, i.e. the classification of the data and the assigned trust levels, the system decides where to store the data in the storage environment.

According to a further aspect of the present invention the storage environment may comprise one, two or multiple storage solutions as well as one, two or multiple storage locations. In the data storage process the user needs not to decide in which data storage solution and/or location in the storage environment the data will be stored. This decision is made by the storage environment itself.

According to still a further aspect of the present invention the assignment of a trust level is done for each storage solution and/or storage location which is part of the storage environment. The assignment needs to be done once, but can be changed by the user at a later point in time. However, this is not needed.

According to another aspect of the present invention the method and system provides trust level based access to the storage environment that allows access to the data only for applications and/or services which fulfil the assigned or required trust level.

According to a further aspect of the present invention the trust level of an application and/or service is assigned by the user. In a data request process which is initiated by an application and/or service, the system allows access to the data for applications and/or services according to the assigned or required trust level of stored data.

The presented method and system can be realized using existing hardware and/or software within the user device.

The following aspects refer to the preferred methods and systems according to present invention:
1. In the data storage process the user needs not to decide in which data storage solution / location in the storage environment the data will be storedMethod for automatically performing data storage based on assigned trust levels of storage solutions and/or locations and a classified or required trust level of the data to be stored. In the data storage process the user needs not to decide in which data storage solution and/or location in the storage environment the data will be stored.
2. Method of aspect 1, comprising the following steps:
   a. providing a storage environment configuration tool being configured to perform a setup of a configuration of storage solutions and/or locations which are part of a storage environment,
   b. providing a storage environment configuration tool being configured to perform a setup of an assignment of a certain respective trust level to each of the configured storage solution and/or location,
   c. providing a data classification tool being configured to allow to assign a certain respective trust level to the data which will be stored in the storage environment in the storage process and
   d. providing a data storage coordinator being configured to make the decision where to store the data in the storage environment based on the assigned trust level of the storage solutions and/or locations in the storage environment and according to the classified or required trust level of the data to be stored.
3. Method of aspect 1 or 2, further comprising giving a user the opportunity to configure the storage solutions and/or locations which are part of the storage environment.
4. Method of any of aspects 1 to 3, further comprising giving a user the opportunity to assign a certain trust level to a configured storage solution and/or location in the storage environment.
5. Method of any of aspects 2 to 4, wherein the data storage coordinator is configured with the ability to search, list, move, copy, duplicate and delete data in the storage environment.
6. Method for automatically performing trust level based access control that allows access to the data in the storage environment only for applications and/or services which fulfil the assigned or required trust level of stored data.
7. Method of aspect 6, comprising the following steps:
   a. providing a storage environment access configuration tool being configured to perform a setup of a configuration of applications and/or services which are allowed to communicate with the storage environment,
   b. providing a storage environment access configuration tool being configured to perform a setup of an assignment of a certain respective trust level to a configured application and/or service which is allowed to communicate with the storage environment,
   c. providing a data access coordinator being configured for performing data access control and making the decision whether an application and/or service gets granted to access to selected data in the storage environment, wherein the decision is made according to the applied or required trust level of the stored data and the assigned trust level to the application and/or service, and
   d. providing an interface and/or API (application programmable interface) that is configured for exchanging the information, preferably at least one of an application and/or a service identifier, a password, certificates, content information, among the applications and/or service and the data access coordinator.
8. Method of aspect 6 or 7, further comprising giving a user the opportunity to configure the applications and/or services which will be allowed to communicate with the storage environment.
9. Method of any of aspects 6 to 8, further comprising giving a user the opportunity to assign a certain trust level to an application and/or service which is allowed to communicate with the storage environment and to access to data according to this trust level.
10. Method of any of aspect 6 to 9, wherein the data access coordinator is configured to perform authentication and/or authorisation in a data access requesting process which is initiated by an application and/or service, wherein the data access coordinator is preferably configured to communicate with the application and/or service and wherein the data access coordinator is preferably further configured to grant or deny data access as a result of the authentication and/or authorisation process.
11. Method of any of aspect 6 to 10, wherein the interface and/or API is configured to exchange information, preferably at least one of an application and/or a service identifier, a password, certificates, content information, among the applications and/or service and the data access coordinator.
12. System configured to automatically perform data storage based on assigned trust levels of storage solutions and/or locations and classified or required trust level of the data to be stored, preferably using a method according to any of aspects 1 to 5.
13. System of aspect 12 comprising:
   a. a storage environment configuration tool being configured to perform a setup of a configuration of storage solutions and/or locations which are part of the storage environment,
   b. a storage environment configuration tool being configured to perform a setup of an assignment of a certain trust level to a configured storage solution and/or location,
   c. a data classification tool being configure to allow to assign a certain respective trust level to the data which will be stored in the storage environment in the storage process, and
   d. a data storage coordinator being configured to make the decision where to store the data in the storage environment based on the assigned trust level of the storage solutions and/or locations in the storage environment and according to the classified or required trust level of the data to be stored.
14. System configured to automatically perform trust level based access control that allows access to the data in the storage environment only for applications and/or services which fulfil the assigned or required trust level of stored data, preferably using a method according to any of aspects 6 to 11.
15. System of aspect 14, comprising:
   a. a storage environment access configuration tool being configured to perform a setup of a configuration of applications and/or services which are allowed to communicate with the storage environment,
   b. a storage environment access configuration tool being configured to perform a setup of an assignment of a certain respective trust level to a configured application and/or service which is allowed to communicate with the storage environment,
   c. a data access coordinator is introduced being configured for performing data access control and making the decision whether an application and/or service gets granted to access to selected data in the storage environment, wherein the decision is made according to the applied or required trust level of the stored data and the assigned trust level to the application and/or service, and
   d. an interface and/or API (application programmable interface) that is configured for exchanging the information, preferably at least one of an application and/or service identifier, a password, certificates, content information, among the application and/or service and the data access coordinator.

By means of this method data storage is performed based on assigned trust levels of storage solutions and/or locations and a classified or required trust level of the data to be stored. The storage environment is managed by the user. Before trust level-based data storage is performed, the user preferably configures the storage environment. By means of a storage environment configuration tool the user administrates the storage solutions as well as storage locations which will be part of the storage environment. This step is preferably done at least once, before using the trust level-based data storage method. In addition the storage environment configuration tool is used to assign a certain trust level to each of the storage solutions and/or storage locations which are part of the storage environment. This step is preferably done at least once, before using the trust level-based data storage method. After this step the trust level-based data storage environment is readily configured and can be used by the user.

In the case that the user aims to store data in the data storage environment, the user triggers the data storage process. The data classification tool is used by the user to define a certain trust level to the data which will be stored in the storage environment.

In the data storage process the data storage coordinator decides where to store the data in the storage environment based on the classified trust level which has been defined by means of the data classification tool. In the data storage process the user needs not to decide in which data storage solution and/or location in the storage environment the data will be stored.

Furthermore, by means of this method trust level based access to the storage environment that allows access to the data only for applications and/or services which fulfil the assigned or required trust level is performed. Before such trust level-based data access control can be performed, the user preferably configures the data access control policies. By means of a storage environment access configuration tool the user administrates the application and/or services which will get access to the storage environment. This step is preferably done at least once, before using the trust level-based data access control method. In addition the storage environment access configuration tool is used to assign a certain trust level to each of the applications and/or services which will get access to the storage environment. This step is preferably done at least once, before using the trust level-based data access control method. After this step the trust level-based data access control method is readily configured and the data access coordinator can perform data access control when an application and/or service is requesting data from the storage environment via the interface and/or API.

Moreover, trust level based access control to the storage environment is performed that allows access to the data only for applications and/or services which fulfil the assigned (required) trust level. The storage environment comprises and interconnects several storage solutions and/or locations. Furthermore, some entities are part of the storage environment entities. The storage environment connects "cloud storage providers" via the Internet, "server with storage solutions" and "Network Attached Storages" (NASs) in e.g. the home network. The controlling and managing element of the storage environment is the "Storage Environment Core Entity". The user device is connected to the storage environment.

### Brief description of the drawing

Figure 1 illustrates a schematic diagram of an embodiment according to the invention comprising a storage environment which enables data storage based on assigned trust levels of storage solutions and/or locations and the classified or required trust level of the data to be stored,
Figure 2 illustrates a schematic block diagram of an apparatus according to the invention functioning as a storage environment core entity,
Figure 3 illustrates a schematic flow diagram of trust level-based data storage related issues, and
Figure 4 illustrates a schematic flow diagram of trust level-based access control to data in the storage environment.

### Detailed description of the drawing

In the following a technical solution is described of a "trust level-based storage environment and trust level-based storage environment access control" approach, according to the present invention. This solution is a concrete realisation of a trust level-based storage environment and trust level-based storage environment access control mechanism which enables data storage based on assigned trust levels of storage solutions and/or locations and the classified or required trust level of the data to be stored. Moreover, trust level based access control to the storage environment is performed that allows access to the data only for applications and/or services which fulfil the assigned or required trust level.

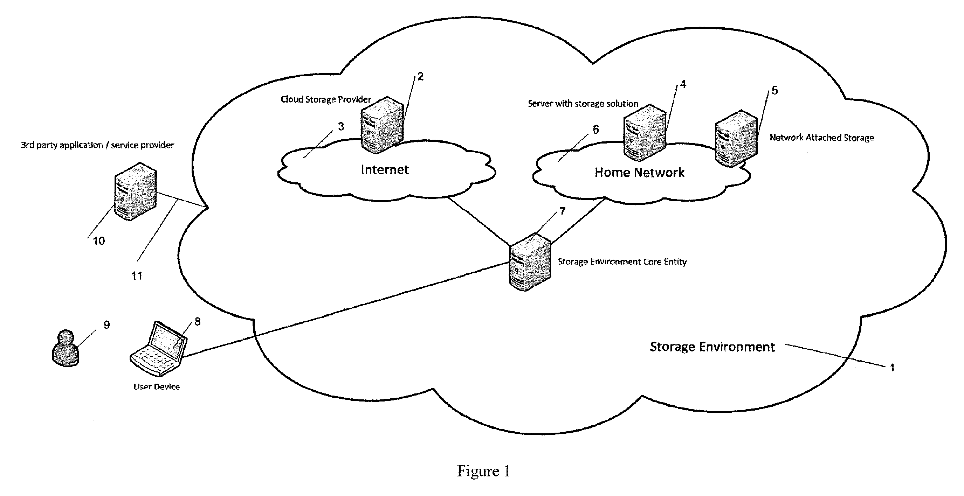

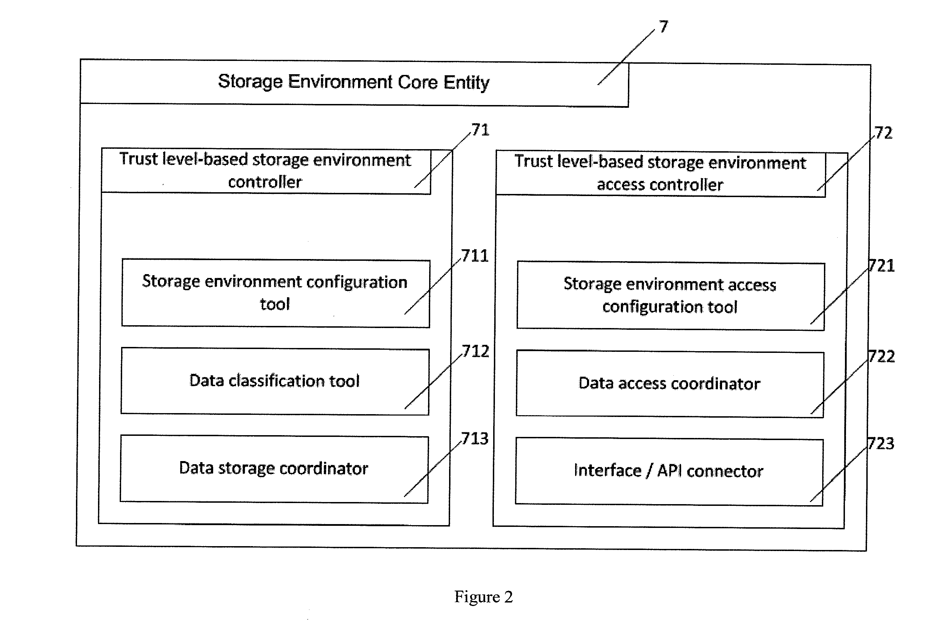

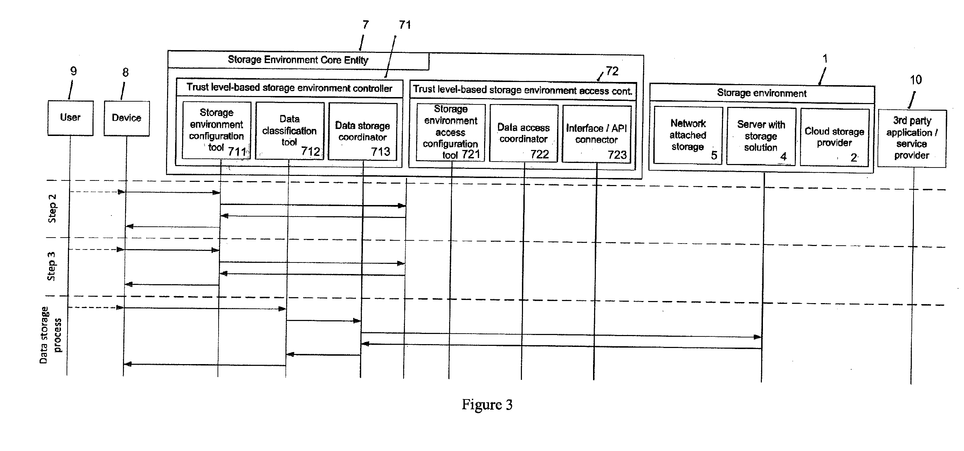

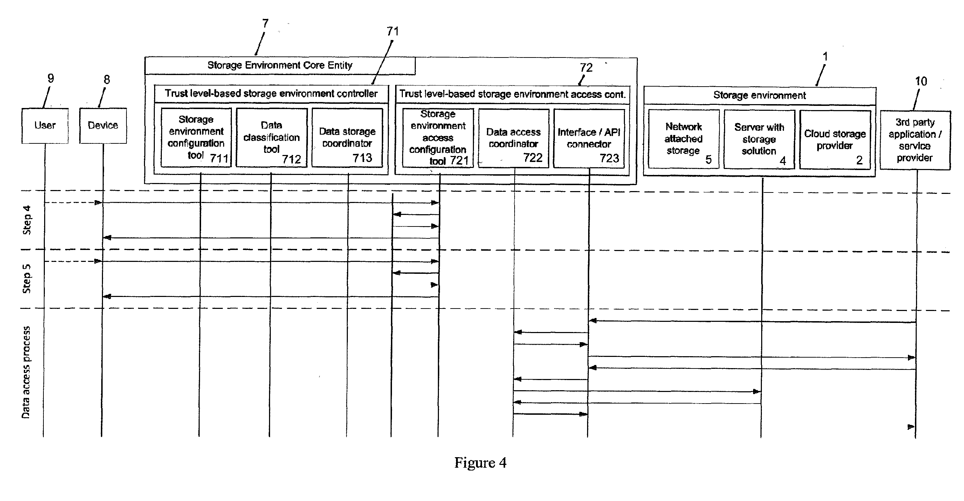

An illustrative embodiment according to the present invention will be described with reference to Figure 1 and Figure 2. In Figure 3 the flow diagram of "trust level-based data storage" related issues is shown, while in Figure 4 the flow diagram of "trust level-based access control to data in the storage environment" is presented. All configuration processes are triggered by the user 9 which uses the user device 8 to interact with the configuration tools of the "trust level-based storage environment and trust level-based storage environment access control" system.

Figure 1 illustrates a schematic diagram of an embodiment according to the invention comprising a storage environment which comprises and interconnects several storage solutions and/or storage locations. Some entities are part of the storage environment entities. The storage environment 1 comprises at least one cloud storage provider 2 which is connected via the Internet 3.The storage environment 1 further comprises at least one server with storage solutions 4 and at least one Network Attached Storage (NAS) 5 in a home network 6. It further comprises a Storage Environment Core Entity 6 functioning as a controlling and managing element of the storage environment 1. The Storage Environment Core Entity 6 is connected to the home network 6 and to the cloud storage provider 2 via the Internet 3. A user device 8 of a user 9 is connected to the storage environment 1. A 3rd party application and/or service provider 10 is configured to communicate via an interface and/or API (application programmable interface) 11 with the storage environment 1.

As illustrated in Figure 2 the storage environment core entity 7 comprises a Trust level-based storage environment controller 71 and a Trust level-based storage environment access controller 72. The trust level-based storage environment controller 71 comprises a Storage environment configuration tool 711, a Data classification tool 712 and a Data storage coordinator 713. The trust level-based storage environment access controller 72 comprises a Storage environment access configuration tool 721, a Data access coordinator 722 and a Interface and/or API connector 11.

The method comprises five steps for performing the setup of the trust level-based storage environment and trust level-based storage environment access control in order to get the system up and running. Step 1, Step 2 and Step3 relate to the setup of the trust level-based storage environment, while Step 4 and Step 5 relate to the setup of the trust level-based storage environment access control. More specifically, in Step 1 the setup of the storage environment and interconnection of its storage locations is performed. In Step 2 the configuration of storage solutions and/or locations which are part of the storage environment is performed. In Step 3 the assignment of trust level to the involved storage locations is made. In Step 4 the setup of applications and/or services which will get access to the storage environment is performed. In Step 5 the assignment of trust level to applications and/or services which will be able to get access to the storage environment is made.

### Trust level-based data storage:

In Figure 3 the flow diagram of "trust level-based data storage" related issues is shown. More specifically, Figure 3 illustrates steps 1 to 3 with reference to storage environment 1, storage environment core entity 7, user device 8 used by a user 9 and 3rd party application / service provider 10 as shown in Figures 1 and 2.
Step 1: Before the trust level-based data storage environment 1 can be used the storage environment 1 needs to be setup and configured. A basic functionality which is needed to setup the storage environment 1 is the ability to interconnect several storage solutions and/or locations, such as "cloud storage providers" 2, "server with storage solutions" 4 and "Network Attached Storages" 5. This basic functionality is provided by the "Storage Environment Core Entity" 7. Additional functionalities are provided by the "Storage Environment Core Entity" 7, in particular the ability to exchange data among remote located storage solutions and the "Storage Environment Core Entity" 7. Furthermore, basic functionalities of the "Storage Environment Core Entity" 7 comprise functions like to copy, move, list and delete data. One example of a useful solution which provides the basic functionality of the "Storage Environment Core Entity" 7 is OwnCloud [7]. One example of a useful protocol which is used to connect remote located storage solutions with the "Storage Environment Core Entity" 7 is WebDAV (Web-based Distributed Authoring and Versioning). Based on this basic functionality, the trust level-based storage environment and trust level-based storage environment access control is realised.
   The "trust level-based storage environment controller" 71 and its functionalities, such as "Storage environment configuration tool" 711, the "Data classification tool" 712 and the "Data storage coordinator" 713 are used to configure the storage environment 1 and perform trust level-based data storage.
Step 2: Before trust level-based data storage can be performed, the user 9 has to configure which storage locations e.g. , one or two or multiple locations 2, 4, 5 are part of the storage environment 1. This configuration is performed by means of the "Storage environment configuration tool" 711. Parameters which are configured in the "Storage environment configuration tool" 711 are e.g. the link and/or URL (Uniform Resource Locator) to a specific storage solutions and/or locations, e.g. 2, 4, 5.
Step 3: Before trust level-based data storage can be performed, the user 9 has to assign the trust level to the storage locations e.g. locations 2, 4, 5 which are part of the storage environment 1. This configuration is performed by means of the "Storage environment configuration tool" 711. The user is able to specify the amount of trust levels n, e.g. 1, 2 and 3. The trust level with the highest number represents the trust level with the highest concern on data privacy. Based on the specified amount of trust levels, the user assigns a trust level to each storage solution and/or location 2, 4, 5 in the storage environment 1.

After performing step 1, step 2 and step 3 the storage environment 1 is setup and configured. Now, the user 9 is able to store data in the storage environment 1. In the data storage process the user 9 uses the "Data classification tool" 712 to assign a specific trust level to the data which will be stored in the storage environment 1. Based on this assigned trust level, the "Data storage coordinator" 713 will store the data in the correct storage location in the storage environment 1. The correct storage location e.g. 2, 4, 5 is automatically determined by the "Data storage coordinator" 713 based on the information, in particular assigned trust level of storage locations in the storage environment 1, defined by the user in "Storage environment configuration tool" 711 at a former step. As a result, in the data storage process the user needs not to decide in which data storage solution and/or location in the storage environment 1 the data will be stored.

### Trust level-based access control to data in the storage environment:

In Figure 4 the flow diagram of "trust level-based access control to data in the storage environment" related issues is shown. More specifically, Figure 4 illustrates the steps 4 and 5 with reference to storage environment 1, storage environment core entity 7, user device 8 used by a user 9 and 3rd party application / service provider 10 as shown in Figures 1 and 2.

Besides trust level-based data storage in the storage environment 1, trust level-based access control is performed for applications and/or services 10 which request data from the storage environment 1. For that purpose, the applications and/or services 10 communicates via the "interface and/or API" 11 with the storage environment 1. In addition to the above mentioned three steps two further steps 4 and 5 are performed to get the trust level-based storage environment access control up and running for applications and/or services 10, e.g. 3rd party providers (e.g. Google Drive [2], Apple iCloud [3], Dropbox [4]).

The "trust level-based storage environment access controller" 72 and its functionalities, such as "Storage environment access configuration tool" 721, the "Data access coordinator" 722 and the "Interface and/or API connector" 723 are used to configure the storage environment 1 and perform trust level-based access control to the data in the storage environment 1.

Step 4: Before trust level-based access control to the storage environment 1 can be used, the trust level-based storage environment 1 needs to be setup and configured, as performed in step 1, step 2 and step 3. In addition the user 9 has to configure which applications and/or services 10 will get access to the storage environment 1. This configuration is performed by means of the "Storage environment access configuration tool" 721. Parameters which are configured in the "Storage environment access configuration tool" 721 are e.g. application and/or service identifier, URL of an access requesting application and/or service 10, and/or credentials, e.g. certificates and/or user name and password, to perform authentication of access requesting applications and/or services 10.

Step 5: Before trust level-based access control can be performed, the user 9 has to assign the trust level to the applications and/or services 10 which will have access to the storage environment 1 (configured in Step 4). This configuration is performed by means of the "Storage environment access configuration tool" 721. The user is able to assign a trust level, which is in the range of the specified trust levels of step 3, to an application and/or service 10.

After (step 1, step 2, step 3 and) step 4 and step 5 the storage environment 1 is setup and configured to perform access control to data within the storage environment 1. Access control is performed by means of the "Data access coordinator" 722. An application and/or service 10 use the "interface and/or API" 11 in order to connect to the "interface and/or API connector" 723 of the storage environment 1. By means of a parameter set consisting of, e.g. application and/or service identifier, URL of the access requesting application and/or service 10, and/or credentials, e.g. certificates and/or user name and password, the application and/or service 10 requests access to the storage environment 1 via the "interface and/or API" 11. One example of a useful solution to realise the "interface and/or API" 11 is OAuth [8]. In the case of data request initiated by an application and/or service 10, via the "interface and/or API" 11, and depending on the assigned trust level to an application and/or service 10, the "Data access coordinator" 722 grants or denies access to the requested data in the storage environment 1.

All configuration information of step 1 to step 5 is stored in the "Storage Environment Core Entity" 7. A database to store the configuration information is possible as well.

The present invention has now been described with reference to several embodiments thereof. The foregoing detailed description and examples have been given for clarity of understanding only. No unnecessary limitations are to be understood there from. It will be apparent to those skilled in the art that many changes can be made in the embodiments described without departing from scope of the present invention. In particular, although features and elements of the present invention are described in the preferred embodiments in particular combinations, each feature or element can be used alone without the other features and elements of the preferred embodiments or in various combinations with or without other features and elements of the invention. Therefore, the scope of the present invention should not be limited to the methods and systems described herein, but only by the language of the claims and the equivalents of those methods and systems.

### References:

1 IDC Analyze the Future, " THE DIGITAL UNIVERSE IN 2020: Big Data, Bigger Digital Shadows, and Biggest Growth in the Far East". [Online]. Available 2014-07-07: http://idcdocserv.com/1414.
2 Google Drive. [Online]. Available 2014-07-07: https://www.google.com/intl/de/drive/
3 Apple iCloud. [Online]. Available 2014-07-07: https://www.icloud.com/
4 Dropbox. [Online]. Available 2014-07-07: https://www.dropbox.com/
5 QNAP. [Online]. Available 2014-07-07: http://www.qnap.com
6 Synology. [Online]. Available 2014-07-07: https://www.synology.com
7 ownCloud. [Online]. Available 2014-07-07: https://owncloud.org/
8 OAuth. [Online]. Available 2014-07-07: http://oauth.net/

## Claims

1. Method for automatically performing data storage based on assigned trust levels of storage solutions and/or locations and a classified or required trust level of the data to be stored.

2. Method of claim 1, comprising the following steps:
a. providing a storage environment configuration tool being configured to perform a setup of a configuration of storage solutions and/or locations which are part of a storage environment,
b. providing a storage environment configuration tool being configured to perform a setup of an assignment of a certain respective trust level to each of the configured storage solution and/or location,
c. providing a data classification tool being configured to allow to assign a certain respective trust level to the data which will be stored in the storage environment in the storage process and
d. providing a data storage coordinator being configured to make the decision where to store the data in the storage environment based on the assigned trust level of the storage solutions and/or locations in the storage environment and according to the classified or required trust level of the data to be stored.

3. Method of claim 1 or 2, further comprising giving a user the opportunity to configure the storage solutions and/or locations which are part of the storage environment.

4. Method of any of claims 1 to 3, further comprising giving a user the opportunity to assign a certain trust level to a configured storage solution and/or location in the storage environment.

5. Method of any of claims 2 to 4, wherein the data storage coordinator is configured with the ability to search, list, move, copy, duplicate and delete data in the storage environment.

6. Method for automatically performing trust level based access control that allows access to the data in the storage environment only for applications and/or services which fulfil the assigned or required trust level of stored data.

7. Method of claim 6, comprising the following steps:
a. providing a storage environment access configuration tool being configured to perform a setup of a configuration of applications and/or services which are allowed to communicate with the storage environment,
b. providing a storage environment access configuration tool being configured to perform a setup of an assignment of a certain respective trust level to a configured application and/or service which is allowed to communicate with the storage environment,
c. providing a data access coordinator being configured for performing data access control and making the decision whether an application and/or service gets granted to access to selected data in the storage environment, wherein the decision is made according to the applied or required trust level of the stored data and the assigned trust level to the application and/or service, and
d. providing an interface and/or API (application programmable interface) that is configured for exchanging the information, preferably at least one of an application and/or a service identifier, a password, certificates, content information, among the applications and/or service and the data access coordinator.

8. Method of claim 6 or 7, further comprising giving a user the opportunity to configure the applications and/or services which will be allowed to communicate with the storage environment.

9. Method of any of claims 6 to 8, further comprising giving a user the opportunity to assign a certain trust level to an application and/or service which is allowed to communicate with the storage environment and to access to data according to this trust level.

10. Method of any of claim 6 to 9, wherein the data access coordinator is configured to perform authentication and/or authorisation in a data access requesting process which is initiated by an application and/or service, wherein the data access coordinator is preferably configured to communicate with the application and/or service and wherein the data access coordinator is preferably further configured to grant or deny data access as a result of the authentication and/or authorisation process.

11. Method of any of claim 6 to 10, wherein the interface and/or API is configured to exchange information, preferably at least one of an application and/or a service identifier, a password, certificates, content information, among the applications and/or service and the data access coordinator.

12. System configured to automatically perform data storage based on assigned trust levels of storage solutions and/or locations and classified or required trust level of the data to be stored, preferably using a method according to any of claims 1 to 5.

13. System of claim 12 comprising:
a. a storage environment configuration tool being configured to perform a setup of a configuration of storage solutions and/or locations which are part of the storage environment,
b. a storage environment configuration tool being configured to perform a setup of an assignment of a certain trust level to a configured storage solution and/or location,
c. a data classification tool being configure to allow to assign a certain respective trust level to the data which will be stored in the storage environment in the storage process, and
d. a data storage coordinator being configured to make the decision where to store the data in the storage environment based on the assigned trust level of the storage solutions and/or locations in the storage environment and according to the classified or required trust level of the data to be stored.

14. System configured to automatically perform trust level based access control that allows access to the data in the storage environment only for applications and/or services which fulfil the assigned or required trust level of stored data, preferably using a method according to any of claims 6 to 11.

15. System of claim 14, comprising:
a. a storage environment access configuration tool being configured to perform a setup of a configuration of applications and/or services which are allowed to communicate with the storage environment,
b. a storage environment access configuration tool being configured to perform a setup of an assignment of a certain respective trust level to a configured application and/or service which is allowed to communicate with the storage environment,
c. a data access coordinator is introduced being configured for performing data access control and making the decision whether an application and/or service gets granted to access to selected data in the storage environment, wherein the decision is made according to the applied or required trust level of the stored data and the assigned trust level to the application and/or service, and
d. an interface and/or API (application programmable interface) that is configured for exchanging the information, preferably at least one of an application and/or service identifier, a password, certificates, content information, among the application and/or service and the data access coordinator.
